(19)

**Europäisches Patentamt**
**European Patent Office**
**Office européen des brevets**

(11) **EP 1 714 216 B1**

(12) **EUROPÄISCHE PATENTSCHRIFT**

(45) Veröffentlichungstag und Bekanntmachung des Hinweises auf die Patenterteilung:
**23.07.2008 Patentblatt 2008/30**

(21) Anmeldenummer: **05797756.3**

(22) Anmeldetag: **24.09.2005**

(51) Int Cl.:
**G06F 11/14** (2006.01)

(86) Internationale Anmeldenummer:
**PCT/EP2005/010354**

(87) Internationale Veröffentlichungsnummer:
**WO 2006/053605 (26.05.2006 Gazette 2006/21)**

(54) **VERFAHREN ZUR PERSISTENTEN SPEICHERUNG VON DHCP TEILNEHMERDATEN**

PROCEDURE FOR PERSISTENT STORAGE OF DHCP SUBSCRIBER DATA

PROCÉDÉ DE SAUVEGARDE PERSISTANTE DE DONNÉES D'ABONNÉS DHCP

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **11.11.2004 EP 04026792**

(43) Veröffentlichungstag der Anmeldung:
**25.10.2006 Patentblatt 2006/43**

(73) Patentinhaber: **Nokia Siemens Networks GmbH & Co. KG**
**81541 München (DE)**

(72) Erfinder: **BINDE, Stephan**
**82065 Baierbrunn (DE)**

(74) Vertreter: **Kley, Hansjörg**
**Nokia Siemens Networks GmbH & Co. KG**
**COO RTP IPR**
**Patent Administration**
**80240 München (DE)**

(56) Entgegenhaltungen:
**EP-A- 1 260 907        WO-A-20/04038979**
**US-B1- 6 681 282**

- **E. CARDONA; K. LUEHRS; D. MAZZOLA; D. JONES;: "Cable Gateway Configuration Management Information Base for CableHome (tm) compliant Residential Gateways" DRAFT-JONES-CABLE-GATEWAY-CONFIG-MIB-02.TXT, 31. März 2003 (2003-03-31), XP015003835 INTERNET ENGINEERING TASK FORCE, GENEVA**
- **RICH WOUNDY; KIM KINNEAR;: "DHCP Lease Query" DRAFT-IETF-DHC-LEASEQUERY-04.TXT, 31. Oktober 2002 (2002-10-31), XP015001686 INTERNET ENGINEERING TASK FORCE, GENEVA**
- **R. DROMS: "Dynamic Host Configuration Protocol" RFC 2131, 31. März 1997 (1997-03-31), XP015007915 INTERNET ENGINEERING TASK FORCE, GENEVA**
- **M. PATRICK;: "DHCP Relay Agent Information Option" RFC 3046, 31. Januar 2001 (2001-01-31), XP015008829 INTERNET ENGINEERING TASK FORCE, GENEVA in der Anmeldung erwähnt**

EP 1 714 216 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zur restart-resistenten Sicherung von Teilnehmerdaten nach dem Oberbegriff des Patentanspruchs 1.

Zur kompakten und exakten Darstellung der Sachverhalte werden nachstehend die für die Telekommunikationsgebiete Zugangstechnologie («access»), Transport («core network») und Internet Protokoll fachspezifischen Begriffe und üblichen Akronyme verwendet. Diese Akronyme sind am Schluss als integraler Teil dieser Schrift aufgeführt. Deshalb wird im nachfolgenden Text meist verzichtet, jeden Begriff oder jedes Akronym speziell einzuführen. Es wird noch angefügt, dass der Begriff Teilnehmer (englisch «subscriber») im Sinne der Telekommunikation und somit im Sinne dieser Schrift keine Person ist.

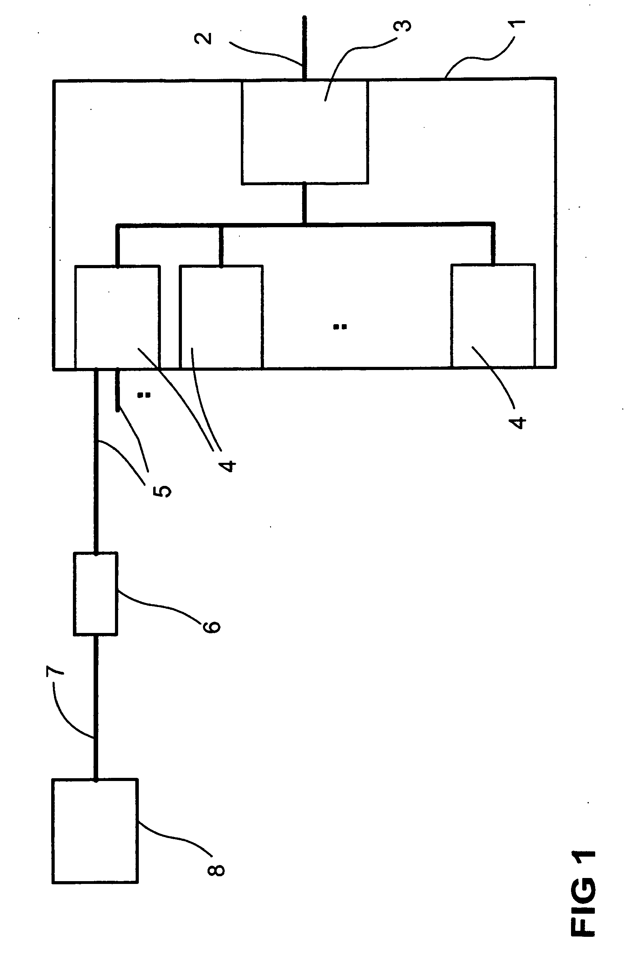

Für den höherbitratigen Zugang zum Teilnehmer wird die sogenannte xDSL-Übertragungstechnik eingesetzt. Eine Mehrzahl von ADSL- oder xDSL-Modems ATU-R ist dabei auf Seite der Anschlussstelle eines Telekommunikationsbetreibers an einen Multiplexer DSLAM angeschlossen. Die typische Anbindung eines xDSL-Zugang an ein Telekommunikationsnetz zeigt Figur 1. Ein ADSL-Modem ist mit dem generischen Begriff ATU-R gekennzeichnet. Oberhalb der Transportschicht erfolgt die Kommunikation mit dem Internetprotokoll IP.

Ein Client Rechner (beim Teilnehmer) benötigt für die Kommunikation eine IP-Adresse. Dazu wird meist mit dem Protokoll DHCP dynamisch eine IP-Adresse aus einem Pool für eine bestimmte Zeit zugewiesen. Vom Betreiber wird dabei oft die Gültigkeit dieser Adresse auf weniger als 24h gesetzt. Dies hat zwei Gründe:

　　i) Der Client Rechner auf der Teilnehmerseite kann so nicht als Host für eine Webanwendung verwendet werden;
　　ii) Dadurch kann die begrenzte Ressource Pool IP-Adressraum besser genutzt werden.

Zur weiteren Erläuterung wird nun auf die Figur 1 bezug genommen. Ein Client Rechner 8 ist über eine xDSL-Strecke 5 über eine einen DSLAM 1 mit einem Server (nicht dargestellt in Figur 1) verbunden. Wie vorstehend erläutert, wird dem Client Rechner 8 für eine begrenzte Zeit «Lease Time» eine IP-Adresse zugewiesen. Mit dieser IP-Adresse ist dieser und nur dieser Client Rechner 8 berechtigt, im Internet Daten auszutauschen. Der DSLAM 1 hat die Aufgabe, die Teilnehmer 8 zu bündeln und den Datenverkehr einem Server zuzuführen. Aus Sicherheitsgründen, zur besseren Teilnehmeradministration sollte dieser Einblick in die zwischen Server und Teilnehmer stattfindende Kommunikation haben. Dazu ist das Protokoll DHCP Relais gemäss RFC 3046 eingeführt worden. Damit erhält der DSLAM 1 als Relaisstation Einblick in die übermittelten Datenpakete und kann IP Adresse, MAC Adresse und Lease Time in einem den Teilnehmer zuzuordnenden Datenfeld speichern.

Dadurch ist auch eine (weitere) Freigabe oder Sperrung des Datenpfades für den betreffenden Teilnehmer wie auch eine allfällige Vergebührung möglich. Beim DHCP-Protokoll ist keine permanente Auffrischung der Daten entsprechend einem «Keep Alive» Mechanismus vorgesehen. Die Adresszuweisung erfolgt - wie bereits ausgeführt - nur beim Start. Die vorgenannten Daten IP Adresse, MAC Adresse und Lease Time sollten deshalb besonders sicher abgelegt werden, damit es zu keinem Synchronisationsverlust zwischen DSLAM 1 und Teilnehmern 8 kommt. Ein Datenverlust hätte als Konsequenz eine Sperrung des Kommunikationspfades zwischen Client Rechner 1 und Server zur Folge. Der Client Rechner 1 besässe zwar immer noch eine gültige IP-Adresse und aus Sicht des Clients besteht daher kein Anlass eine neue IP-Adresse anzufordern. Beim DSLAM 1 kommen gewollt oder ungewollt kurze Unterbrechungen vor und damit geht in der Regel ein Verlust von dynamischen Daten einher. Gewollt ist eine kurze Unterbrechung insbesondere dann, wenn aus Inkonsisterizgründen die Sicherheitstechnik einen sogenannten Restart des DSLAM's 1 veranlasst.

Es stellt sich somit das Problem, die teilnehmerbezogenen Daten IP Adresse, MAC Adresse und Lease Time in einem neustart-resistenten Speicher abzulegen und auf einfache Weise schnell zu rekonstruieren.

Prinzipiell ist dieses Problem lösbar durch die alternativen Ansätze:

A　　Suche nach Daten in einem Speicherfeld;
B　　Speicherung von festen Daten in restart-resistenten Speichern.

Zum Ansatz A

Teilnehmerdaten wie MAC-Adresse, Teilnehmerindex, usw. werden in einem Speicherbaustein abgelegt und mittels eines schnellen Zugriffsverfahren erneut abgerufen. Dazu gibt es hardwarenahe Lösungen wie CAM-Bausteine, die auf schnelle Suchzugriffe ausgelegt sind und nach Eingabe eines Suchbegriffes (z.B. Teilnehmerindex) den gesuchten Datensatz (z.B. MAC Adresse) zurückgeben. Dieses Verfahren ist prinzipiell auch als Softwarelösung einsetzbar. Dazu ist stets eine Umspeicherung der Daten im CAM-Baustein nach jedem Neueintrag erforderlich. Ausserdem sind CAM-Bausteine meist nicht restart-resistent.

Zum Ansatz B

B.1 WO 2004/038979 A2
In WO 2004/038979 A2 [2] wird für ein passives optisches Netzwerk PON für die Wiederherstellung eines Adresszuordnung vorgeschlagen, diese in einem nichtflüchtigen Speicher abzulegen und durch gezielte Abfragen (queries) den Ausgangszustand wieder herzustellen.

B.2 EP 1 260 907 A1

In der Schrift EP 1 260 907 A1 [1] ist ein Verfahren zur persistenten Speicherung von Daten offenbart, bei dem beim Hochlauf Teile des Betriebssystems von einem als FLASH-PROM ausgebildeten Lesespeicher beim Hochlauf in den Schreib-/Lesespeicher kopiert werden. Nachher kann ggf. der FLASH-PROM Lesespeicher mit einer neuen Version der Betriebssystemteile versehen werden. FLASH-PROM-Speicher sind restartresistent, ein Wiederbeschreiben ist jedoch nur nach vorgängigem blockweisen löschen möglich. Aus diesem Grunde kann diese Technik für das obgenannte Problem nicht eingesetzt werden. Der Begriff «restart-resistent» wird im Sinne dieser Schrift synonym mit dem Begriff «neustart-resistent» verwendet.

Der vorliegenden Erfindung liegt daher die Aufgabe zugrunde, ein Verfahren zur neustart-resistenten Sicherung von Teilnehmerdaten von an einem Anschlussmultiplexer angeschlossenen Teilnehmern anzugeben, das erlaubt, Teilnehmerdaten über einen Restart eines Anschlussmultiplexers zu erhalten und nach erfolgtem Restart auf einfache Weise den Teilnehmern des betreffenden Anschlussmultiplexers zuzuordnen und somit zu rekonstruieren.

Diese Aufgabe wird durch das im Patentanspruch 1 angegebene Verfahren gelöst. Vorteilhafte Ausgestaltungen der Erfindung sind in weiteren Ansprüchen angegeben.

Das erfindungsgemässe Verfahren erlaubt nach einem Restart eines Anschlussmultiplexers eine einfache Rekonstruktion der dynamischen Daten ohne dass deswegen Umspeicherungen vorgenommen werden müssen. Dies wird einerseits durch einen die Teilnehmeranschlussdatensätze enthaltenden restart-resistenten Speicher erreicht und andererseits zusätzlich ein Index pro Teilnehmeranschlussdatensatz gespeichert, der den betreffenden Teilnehmer identifiziert.

Auf diese Weise ist ein einfaches Verfahren zur Sicherung und Rekonstruktion der vital wichtigen Teilnehmeranschlussdaten geschaffen. An dieser Stelle sei bemerkt, dass im Kontext dieser Schrift unter dem Begriff Sicherung bzw. Datensicherung nicht nur die Ablage sondern auch die Rekonstruktion der (Teilnehmer-)Daten subsummiert ist. Dies entspricht auch dem umgangssprachlichen Verständnis, da unter dem Begriff Datensicherung stets auch gemeint ist, damit die Daten auch wieder am ursprünglichen Ort wiederherstellen zu können.

Die Erfindung wird nachfolgend anhand der Zeichnung näher erläutert. Dabei zeigen:

Figur 1    Anbindung der ADSL-Teilnehmer an eine Telekommunikationsinfrastruktur;

Figur 2    Initialzustand einer Datenstruktur mit (zukünftigen) Teilnehmerdaten;

Figur 3    Zustand einer Datenstruktur mit Teilnehmerdaten bei Einfügung eines neuen Teilnehmerdatensatzes;

Figur 4    Zustand einer Datenstruktur mit Teilnehmerdaten bei Löschung eines abgelaufenen Teilnehmerdatensatzes;

Figur 5    Zustand einer Datenstruktur mit Teilnehmerdaten bei Ersetzung eines abgelaufenen Teilnehmerdatensatzes durch einen neuen Teilnehmerdatensatz.

Das Ausführungsbeispiel bezieht sich auf einen DSLAM, auch DSLAM-Anschluss-Multiplexer oder Anschluss-Multiplexer 1 genannt. Die Erfindung ist jedoch für jede Art Anschlusstechnologie anwendbar, bei der für die Teilnehmer 8 restart-resistente Teilnehmerdaten verwaltet werden müssen. Wie bereits ausgeführt, zeigt die Figur 1 die Anbindung der ADSL-Teilnehmer an eine Telekommunikationsinfrastruktur. Gezeichnet ist explizit lediglich ein einziger Teilnehmer 8. Zum weiteren Verständnis: An einem Anschluss-Multiplexer 1 sind eine Mehrzahl von ADSL-Teilnehmern 8 angeschlossen. Diese Mehrzahl bzw. Anzahl ist im Kontext dieser Schrift mit M bezeichnet. Im Kontext dieser Schrift ist meist von Teilnehmerdatensätzen oder kurz von Datensatz die Rede. In einer sehr konzisen Nomenklatur müsste stattdessen und stets der Begriff «Teilnehmerzugangsdatensatz» benutzt werden, dies wird einfach unter dem vorgenannten Begriff Teilnehmerdatensätze subsummiert. Der Anschlussmultiplexer weist ein Prozessorsystem auf das auf die bekannte Weise über einen Schreib-/Lesespeicher RAM verfügt und für die Ausführung der vorliegenden Erfindung einen neustart-resistenten Speicher RRM. Der neustart-resistente Speicher RRM ist so dimensioniert, dass N Teilnehmerdatensätze gespeichert werden können. Dabei gilt die Restriktion

$$N > M.$$

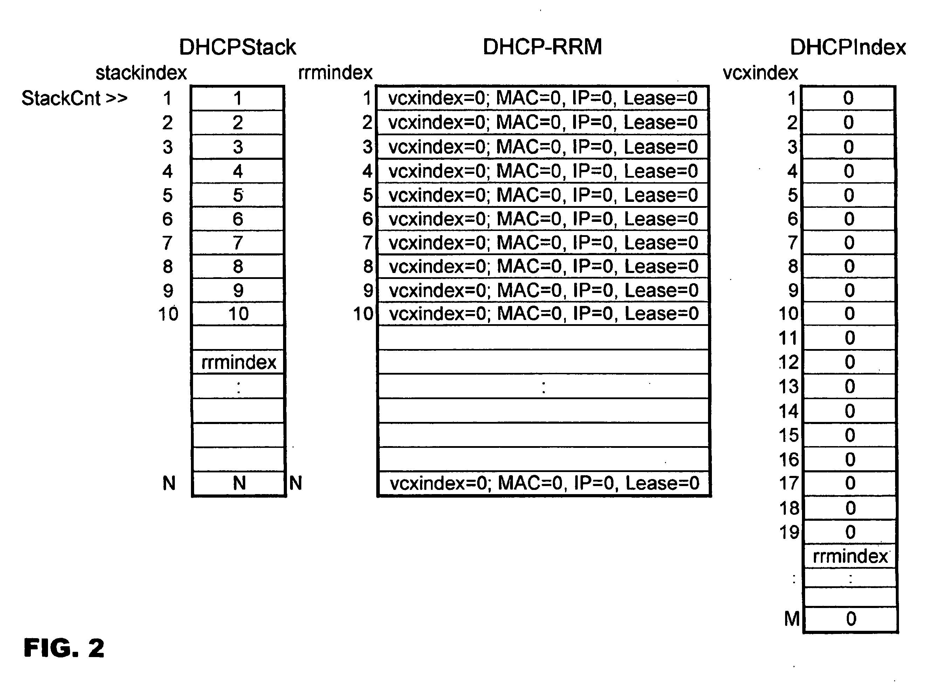

Anhand der Figuren 2 bis 5 wird nun das Verfahren erläutert. Die am Schluss dieses Dokumentes unter «Liste der verwendeten Bezugszeichen und Variablen» aufgeführten Erläuterungen und Definitionen beinhalten einen integralen Bestandteil.

Die Reihenfolge der abzuspeichernden Teilnehmerdatensätze für die Anzahl M von Teilnehmern ist beliebig. Für das erfindungsgemässe Verfahren wird das (naheliegende) Prinzip «first come first served» angewendet. Das bedeutet, dass in möglichst effizienter Weise die Datensätze abgelegt werden, insbesondere sollen keine Umsortierungen vorgenommen werden. Für die weitere Verwaltung/Administration dieser Datensätze stellt sich das Problem der Alterung «Lease Time» bzw. der zeitlich beschränkten Gültigkeit einer Verbindung wie dies eingangs bereits erläutert wurde. Nach Ablauf der Gültigkeit eines Datensatzes soll ebenfalls keine Umsortierung vorgenommen werden. Stattdessen sollen nicht mehr gültige Datensätze mit einem neuen aktuellen Datensatz überschrieben werden können.

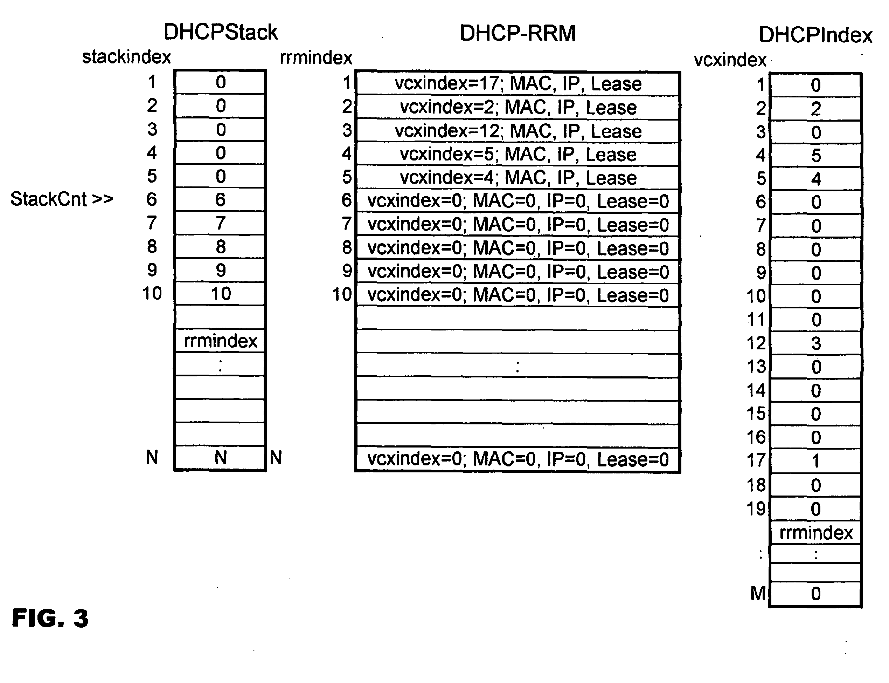

Für die Speicherung der restart-resistenten Teilnehmerdatensätze enthaltend eine MAC-Adresse, eine IP-Adresse, die Gültigkeitsdauer und die Zuordnung (Index vcxindex) zum betreffenden Teilnehmer steht ein restart-resistenter Speicher RRM der Kapazität N Datensätze zur Verfügung. In diesem Speicher RRM mit dem Bezugszeichen DHCP-RRM (siehe dazu die Figuren 2 bis 5) wird in der aktuell auftretenden Reihenfolge gespeichert. Die Füllstandskontrolle dieses Speichers RRM übernimmt ein dynamischer Speicher DHCP-Stack. Dazu gibt es einen Stackpointer StackCnt der anzeigt, welches Element im Speicher DHCP-RRM gerade das nächste freie Element ist. Ist ein Datensatz im Speicher DHCP-RRM abzulegen, gibt das Element an der Stelle StackCnt im Speicher DHCPStack an, welches das nächste freie Element im Speicher DHCP-RRM ist. Nach erfolgter Abspeicherung des Datensatzes wird an der Stelle StackCnt der Wert Null eingeschrieben. Dies bedeutet, dass die betreffende Stelle im Speicher DHCP-Stack mit einem gültigen Eintrag belegt ist. Anschliessend wird der Zeiger StackCnt um 1 inkrementiert. Aus Sicht der nummerierten/indexierten Teilnehmer ist ein weiterer Schreib-/Lesespeicher DHCPIndex vorgesehen, an welcher Stelle rrmindex im Speicher DHCP-RRM der Datensatz des Teilnehmers mit Anschlussindex vcxindex steht, die Teilnehmer sind hier linear geordnet aufgeführt. Dieser Sachverhalt ist der Figur 3 zu entnehmen. Die Belegung und Lage der verschiedenen Indizes ist im Initialzustand mit Null gespeicherten Datensätzen in Figur 2 dargestellt.

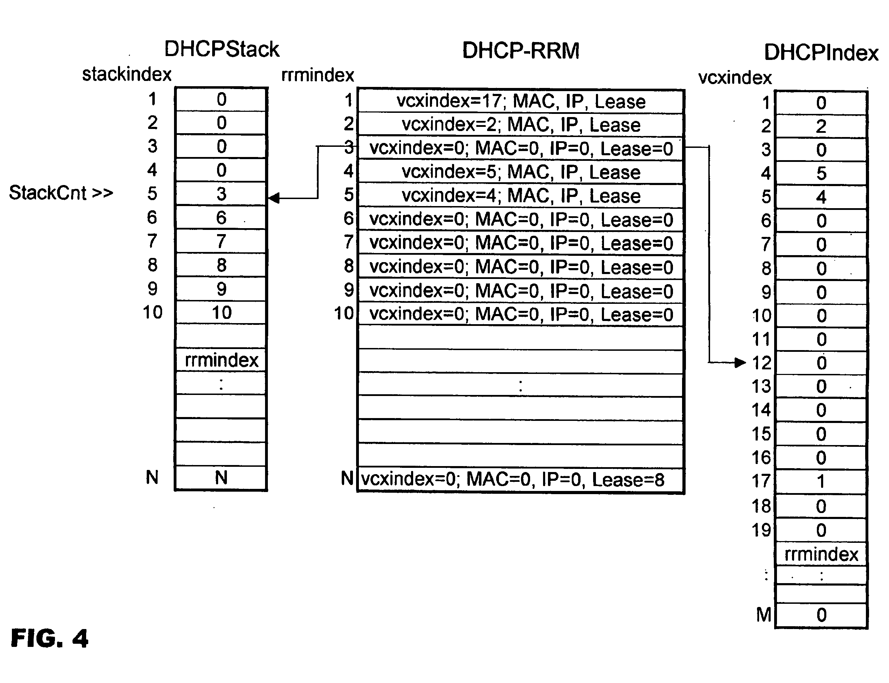

Das Entfernen eines Teilnehmerdatensatzes wird nun anhand der Figur 4 erläutert. Figur 4 zeigt einen beispielhaften Zustand mit 5 gültigen Datensätzen. Dies ist so gewährleistet, dass im Speicher DHCP-RRM vcxindex, MAC-Adresse, IP-Adresse und Lease time auf einen ungültigen Wert gesetzt werden, dazu wird hier die Codierung mit Null gewählt. Läuft die Gültigkeitsdauer «Lease Time» für einen Teilnehmer ab, so wird wie folgt verfahren:

Im Speicher DHCPIndex wird an der Stelle vcxindex der Index rrmindex herausgelesen. Der Inhalt des betreffenden Datensatzes im Speicher DHCP-RRM wird in der vorgenannten Weise als ungültig mit den Nullen überschrieben. Dabei wird der Stackpointer um 1 dekrementiert und im Speicher DHCPStack wird der Wert Null (=belegt) mit dem Index rrmindex des nun freigewordenen Speicherplatzes im Speicher DHCP-RRM überschrieben. Im vorliegenden Fall gemäss Figur sind dies:

rrmindex = 3
StackCnt = 5
vcxindex = 12, also Teilnehmer 12.

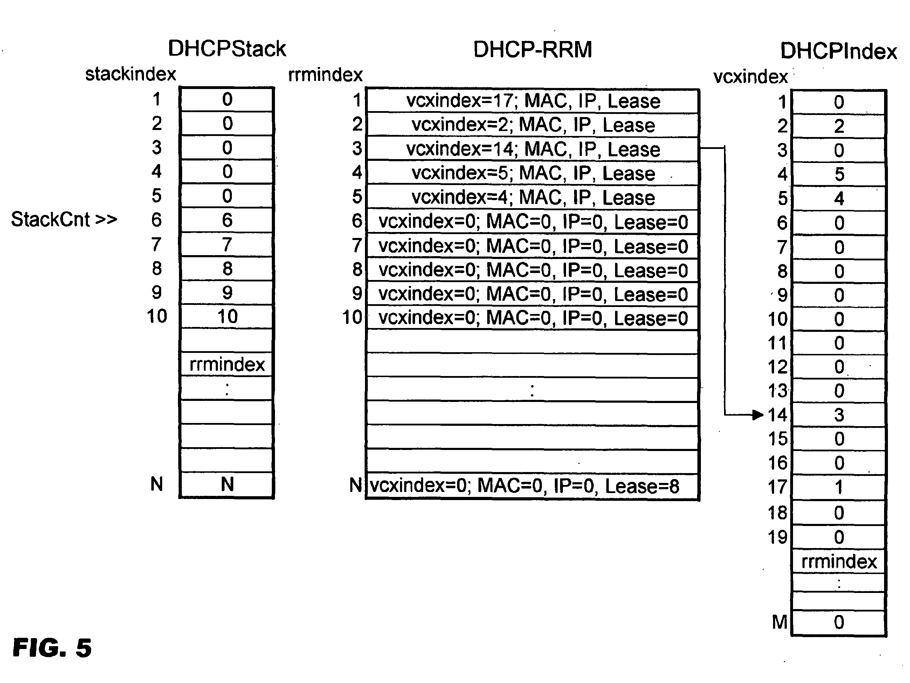

In Figur 5 ist das Einfügen eines neuen Teilnehmerdatensatzes gezeigt. Dabei wird von der Situation gemäss der Figur 4 ausgegangen, wonach an der Stelle rrmindex=3 des Speichers DHCP-RRM «dazwischen» ein freier Platz ist. Der nächste einzuspeichernde Teilnehmerdatensatz für den Teilnehmer mit vcxindex=14 ist nun wie folgt eingetragen:

An der alten Stelle StackCnt=5 wurde-Null für belegt eingetragen, anschliessend wurde StackCnt um 1 inkrementiert, nun auf stackIndex=6. Durch einen Scan von rrmindex=1 an wurde im Speicher DHCP-RRM an der Stelle rrmindex=3 ein freier Platz gefunden. Hier werden nun der Datensatz für den Teilnehmer 14 eingetragen. Mit dem Begriff Scan ist ein effezientes Absuchen eines Speicherbereiches subsummiert. Vorzugsweise wird bei der Implementierung dazu eine sogenannt maschinennahe Instruktion SCAN_EQUAL oder SCAN_NOT_ EQUAL verwendet.

Bei einem Restart des Anschluss-Multiplexers werden die Daten im Speicher DHCPStack und DHCPIndex wie folgt rekonstruiert:

i) Der Speicher DHCPStack wird mit dem Index überschrieben, an der Stelle stackindex steht der Wert stackindex.
ii) Speicher DHCPIndex wird mit Null initialisiert.
iii) Der restart-resistente Speicher wird von rrmindex=1 aus gescant. Bei jedem gefundenen gültigen Eintrag - z.B. ungleich Null gemäss der vorstehend genannten Codierung - wird der an der Stelle StackCnt im Speicher DHCPStack der Wert 0 eingeschrieben und anschliessend der Stackpointer StackCnt um 1 inkrementiert. Bei einem als gültig erkannten Teilnehmerdatensatz wird die Nummer/Index vcxindex herausgelesen und an der Stelle vcxindex im Speicher DHCPIndex der Index rrmindex des betreffenden gültigen Datensatzes eingeschrieben, Es wird also der vorstehende tote Zustand mit Null mit einem gültigen Index rrmindex überschrieben.

Mit der Restriktion N < M gilt es bei der Implementierung, auftretende Fehlerfälle zu erkennen und entsprechend mit Routinen zur Überlaufsicherung zu signalisieren. Die Werte für N und M werden vorzugsweise, an ein durchschnittliches Verkehrsaufkommen angepasst.

Der Erfindungsgedanke erlaubt jedoch, genauso viele Speicherplätze für Teilnehmerdatensätze vorzusehen, wie Teilnehmer am Anschlussmultiplexer 1 angeschlossen sind.

Es sind hier nur die minimal zu speichernden Teilnehmerdaten pro Teilnehmeranschlussdatensatz aufgeführt.

Liste der verwendeten Akronyme

| | |
|---|---|
| ADSL | Asymmetric DSL |
| ATM | Asynchroner Transfer-Modus |
| ATU-R | ADSL Transceiver Unit, Remote (terminal end) |
| CLU | Central Line Unit |

| DSL | Digital Subscriber Line |
|---|---|
| DSLAM | Digital Subscriber Line Access Multiplexer; |
| IP | Internet Protocol, verkürzt im Kontext dieser Schrift IP-Adresse |
| NT | Network Termination |
| MAC | Media Access Control |
| PON | Passive optical network |
| RAM | Random Access Memory |
| RRM | Restart Resistent Memory |
| SDH | Synchrone Digitale Hierarchie |
| SDSL | Symmetric DSL |
| xDSL | Bezeichnung für verschiedene DSL-Übertragungstechnologien wie, ADSL, SDSL, usw. |

**Liste der verwendeten Bezugszeichen und Variablen**

| 1 | DSLAM | DSLAM-Anschluss-Multiplexer, Anschluss-Multiplexer |
|---|---|---|
| 2 | Ethernet oder ATM | |
| 3 | CLU | |
| 4 | SU | |
| 5 | xDSL | |
| 6 | Network Termination, Splitter | |
| 7 | Ethernet | |
| 8 | Personalcomputer, Endgerät, Client Rechner | |

| DHCPStack | dynamischer Speicher zur Adressierung der Elemente im neustart-resistenten Speicher DHCP-RRM und zur Ermittlung des Füllstandes des Speichers DHCP-RRM. |
|---|---|
| DHCP-RRM | neustart-resistenter Speicher enthaltend die Teilnehmerdatensätze. |
| DHCPIndex | dynamischer Speicher zur Adressierung der Elemente im neustart-resistenten Speicher DHCP-RRM aus Sicht der nummerierten/indizierten Teilnehmer. |
| Lease | Lease Time, Gültigkeitsdauer |
| M | Anzahl der (ADSL-) Teilnehmer pro Anschluss-Multiplexer |
| N | Anzahl der zu speichernden Datensätze in einem neustart-resistenten Speicher |
| StackCnt | Aktueller Füllstand, Zeiger |
| Stackindex | Index zur Adressierung des dynamischen Speichers DHCPStack. |
| vcxindex | Index zur Adressierung des dynamischen Speichers DHCPIndex (aus Sicht der nummerierten/indizierten Teilnehmer), wobei ein Element genau einem Teilnehmer zugeordnet ist. |
| rrmindex | Index zur Adressierung des neustart-resistenten Speichers enthaltend die Teilnehmerdatensätze.. |

**Literaturliste**

[1]  EP 1 260 907 A1, Veröffentlichungsdatum 27.11.2002, «Verfahren zur persistenten Speicherung von Daten» Siemens Schweiz AG, 8047 Zürich.

[2]  WO 2004/038979 A2, Veröffentlichungsdatum 06.05.2004 «Passive optical network address association recovery»
Optical Solutions, Inc. Minneapolis.

**Patentansprüche**

1. Verfahren zur restart-resistenten Sicherung von Teilnehmerdaten in einem Anschluss-Multiplexer, die pro Teilnehmer (8) in einem Teilnehmeranschlussdatensatz gespeichert sind, der wenigstens beinhaltet:

    - eine elektronische Adresse (MAC, IP) und
    - eine Gültigkeitsdauer (lease);

    wobei die Teilnehmeranschlussdatensätze in einem restart-resistenten Speicher (DHCP-RRM) abgelegt werden, **gekennzeichnet dadurch, dass**
    weiter der Teilnehmeranschlussdatensatz enthält:

    einen den betreffenden Teilnehmer (8) identifizierenden Index (vcxindex);
    und dass nach einem Neustart des Anschluss-Multiplexers (1) die Teilnehmerdaten rekonstruiert werden durch die Verfahrensschritte:

    A Feststellung der Anzahl der Teilnehmerdatensätze (StackCnt) und damit Füllstand des restart-resistenten Speichers (DHCP-RRM);
    B Zuordnung der linear geordneten Teilnehmer (8) über eine in einer Tabelle (DGCPIndex) gespeicherten den betreffenden Teilnehmer (8) identifizierenden Index (vcxindex) zum gespeicherten Datensatz.

2. Verfahren nach Anspruch 1,
    **dadurch gekennzeichnet, dass**
    vor Ausführung der Verfahrensschritte A und B bei einer Rekonstruktion folgende Initialisierungen vorgenommen werden:

A1 Initialisierung eines ersten dynamischen Schreib-/Lesespeichers (DHCPStack) durch eine aufsteigende Wertfolge und eines Zeigers (StackCnt), welcher über den initialisierten dynamischen Schreib-/Lesespeicher (DHCP-Stack) auf den nächsten freien Platz im Restartresistenten Speicher (DHCP-RRM) zeigt;

A2 Initialisierung eines zweiten ersten dynamischen Schreib/Lesespeichers (DHCPIndex), der in der Ordnung der nummerierten Teilnehmer (8) auf zugehörige Datensätze zeigt mit einem Wert, der keiner Zuordnung entspricht.

3. Verfahren nach Anspruch 2,
**dadurch gekennzeichnet, dass**
im restart-resistenten Speicher (DHCP-RRM) ungültige Datensätze durch einen festen Wert codiert werden, wobei hierfür vorzugsweise der Wert 0 vorgesehen ist.

4. Verfahren nach Anspruch 3,
**dadurch gekennzeichnet, dass**
im Verfahrensschritt A die Feststellung der Anzahl Datensätze durch einen Scan der im restart-resistenten Speicher (DHCP-RRM) abgelegten Datensätze erfolgt.

5. Verfahren nach einem der Ansprüche 2 bis 4,
**dadurch gekennzeichnet, dass**
im Verfahrensschritt B die Zuordnung durch Überschreiben des keiner Zuordnung entsprechenden Wertes mit dem Index (rrmindex) des im restart-resistenten Speichers abgelegten als gültig erkannten Datensatzes erfolgt.

6. Verfahren nach einem der Ansprüche 1 bis 5,
**dadurch gekennzeichnet, dass**
die Anzahl (M) der Teilnehmer grösser ist als die Anzahl (N) speicherbarer Datensätze und dass im Falle eines Erreichens der Grenze (N) speicherbarer Datensätze Routinen zur Überlaufsicherung und Signalisierung aufgerufen werden.

**Claims**

1. Method for the restart-resistant backup of subscriber data in an access multiplexer which are stored for each subscriber (8) in a subscriber line data record which contains at least:

- an electronic address (MAC, IP) and
- a validity period (lease);

the subscriber line data records being stored in a restart-resistant memory (DHCP-RRM),

**characterized in that**
also the subscriber line data record contains:

an index (vcxindex) identifying the relevant subscriber (8);
and **in that** after the access multiplexer (1) has been restarted the subscriber data are reconstructed by the following method steps:

A establishment of the number of subscriber data records (StackCnt) and hence the filling level of the restartresistant memory (DHCP-RRM);
B association of the linearly organized subscribers (8) with the stored data record using an index (vcxindex) which is stored in a table (DGCPIndex) and identifies the relevant subscriber (8).

2. Method according to Claim 1,
**characterized in that**
prior to the execution of method steps A and B a reconstruction prompts the following initialization operations to be performed:

A1 initialization of a first dynamic read/write memory (DHCPStack) by a rising value sequence and of a pointer (StackCnt) which uses the initialized dynamic read/write memory (DHCPStack) to point to the next free location in the restart-resistant memory (DHCP-RRM);
A2 initialization of a second first dynamic read/write memory (DHCPIndex) which points, in the organization of the numbered subscribers (8), to related data records with a value which does not correspond to any association.

3. Method according to Claim 2,
**characterized in that**
invalid data records in the restart-resistant memory (DHCP-RRM) are encoded by a fixed value, the value 0 preferably being provided for this.

4. Method according to Claim 3,
**characterized in that**
in method step A the number of data records is established by scanning the data records stored in the restart-resistant memory (DHCP-RRM).

5. Method according to one of Claims 2 to 4,
**characterized in that**
in method step B the association is made by overwriting the value which does not correspond to any association with the index (rrmindex) of that data record stored in the restart resistant memory which is identified as valid.

6. Method according to one of Claims 1 to 5,

**characterized in that**

the number (M) of subscribers is greater than the number (N) of storable data records and **in that** if the limit (N) of storable data records is reached then routines for overflow protection and signalling are called.

**Revendications**

1. Procédé pour la sauvegarde persistante de données d'abonné dans un multiplexeur de raccordement, qui sont stockées par abonné (8) dans un ensemble de données de raccordement d'abonné, qui contient au moins :

   - une adresse électronique (MAC, IP) et
   - une durée de validité (lease) ;

   les ensembles de données de raccordement d'abonné étant déposés dans une mémoire persistante (DHCP-RRM),
   **caractérisé en ce que**
   l'ensemble de données de raccordement d'abonné contient également :

   un index (vcxindex) identifiant l'abonné (8) concerné et **en ce que**, après un redémarrage du multiplexeur de raccordement (1), les données d'abonnés sont reconstituées par les étapes de procédé suivantes :

   A. Constatation du nombre d'ensembles de données d'abonnés (StackCnt) et donc état de remplissage de la mémoire persistante (DHCP-RRM) ;
   B. Attribution des abonnés (8) ordonnés de façon linéaire au moyen d'un index (vexindex) stocké dans un tableau (DGCPIndex) et identifiant l'abonné (8) concerné à l'ensemble de données stocké.

2. Procédé selon la revendication 1,
   **caractérisé en ce que**,
   avant l'exécution des étapes de procédé A et B, les initialisations suivantes sont effectuées lors d'une reconstitution :

   A1. Initialisation d'une première mémoire d'écriture/lecture (DHCPStack) dynamique par une succession de valeurs croissante et d'un indicateur (StackCnt), qui indique par la mémoire d'écriture/lecture (DHCPStack) dynamique initialisée le prochain emplacement libre dans la mémoire persistante (DHCP-RRM) ;
   A2. Initialisation d'une seconde première mémoire d'écriture/lecture (DHCPIndex) dynamique, qui indique dans l'ordre des abonnés (8) numérotés des ensembles de données correspondant avec une valeur qui ne correspond à aucune attribution.

3. Procédé selon la revendication 2,
   **caractérisé en ce que**,
   dans la mémoire persistante (DHCP-RRM), des ensembles de données non valables sont codés par une valeur fixe, sachant que la valeur 0 est prévue de préférence à cet effet.

4. Procédé selon la revendication 3,
   **caractérisé en ce que**,
   à l'étape de procédé A, la constatation du nombre d'ensembles de données s'effectue par un balayage des ensembles de données déposés dans la mémoire persistante (DMCP-RRM).

5. Procédé selon l'une quelconque des revendications 2 à 4,
   **caractérisé en ce que**,
   à l'étape de procédé B, l'attribution s'effectue par l'écrasement de la valeur correspondant à aucune attribution avec l'index (rrmindex) de l'ensemble de données reconnu valable et déposé dans la mémoire persistante.

6. Procédé selon l'une quelconque des revendications 1 à 5,
   **caractérisé en ce que**,
   le nombre (M) des abonnés est supérieur au nombre (N) d'ensembles de données mémorisables et **en ce que**, lorsque la limite (N) d'ensembles de données mémorisables est atteinte, des routines pour la sauvegarde de trop-plein et la signalisation sont appelées.

FIG 1

## DHCPStack

stackindex             rrmindex

StackCnt >>

| | |
|---|---|
| 1 | 1 |
| 2 | 2 |
| 3 | 3 |
| 4 | 4 |
| 5 | 5 |
| 6 | 6 |
| 7 | 7 |
| 8 | 8 |
| 9 | 9 |
| 10 | 10 |
| | rrmindex |
| | : |
| | |
| | |
| | |
| N | N |

## DHCP-RRM

rrmindex

| | |
|---|---|
| 1 | vcxindex=0; MAC=0, IP=0, Lease=0 |
| 2 | vcxindex=0; MAC=0, IP=0, Lease=0 |
| 3 | vcxindex=0; MAC=0, IP=0, Lease=0 |
| 4 | vcxindex=0; MAC=0, IP=0, Lease=0 |
| 5 | vcxindex=0; MAC=0, IP=0, Lease=0 |
| 6 | vcxindex=0; MAC=0, IP=0, Lease=0 |
| 7 | vcxindex=0; MAC=0, IP=0, Lease=0 |
| 8 | vcxindex=0; MAC=0, IP=0, Lease=0 |
| 9 | vcxindex=0; MAC=0, IP=0, Lease=0 |
| 10 | vcxindex=0; MAC=0, IP=0, Lease=0 |
| | |
| | |
| | : |
| | |
| | |
| | |
| N | vcxindex=0; MAC=0, IP=0, Lease=0 |

## DHCPIndex

vcxindex

| | |
|---|---|
| 1 | 0 |
| 2 | 0 |
| 3 | 0 |
| 4 | 0 |
| 5 | 0 |
| 6 | 0 |
| 7 | 0 |
| 8 | 0 |
| 9 | 0 |
| 10 | 0 |
| 11 | 0 |
| 12 | 0 |
| 13 | 0 |
| 14 | 0 |
| 15 | 0 |
| 16 | 0 |
| 17 | 0 |
| 18 | 0 |
| 19 | 0 |
| | rrmindex |
| | : |
| | |
| M | 0 |

## FIG. 2

EP 1 714 216 B1

## DHCPStack

stackindex    rrmindex

| stackindex | value |
|---|---|
| 1 | 0 |
| 2 | 0 |
| 3 | 0 |
| 4 | 0 |
| 5 | 0 |
| StackCnt >> 6 | 6 |
| 7 | 7 |
| 8 | 8 |
| 9 | 9 |
| 10 | 10 |
| | rrmindex |
| | : |
| | |
| | |
| N | N |

## DHCP-RRM

| rrmindex | value |
|---|---|
| 1 | vcxindex=17; MAC, IP, Lease |
| 2 | vcxindex=2; MAC, IP, Lease |
| 3 | vcxindex=12; MAC, IP, Lease |
| 4 | vcxindex=5; MAC, IP, Lease |
| 5 | vcxindex=4; MAC, IP, Lease |
| 6 | vcxindex=0; MAC=0, IP=0, Lease=0 |
| 7 | vcxindex=0; MAC=0, IP=0, Lease=0 |
| 8 | vcxindex=0; MAC=0, IP=0, Lease=0 |
| 9 | vcxindex=0; MAC=0, IP=0, Lease=0 |
| 10 | vcxindex=0; MAC=0, IP=0, Lease=0 |
| | |
| | : |
| | |
| N | vcxindex=0; MAC=0, IP=0, Lease=0 |

## DHCPIndex

vcxindex

| vcxindex | value |
|---|---|
| 1 | 0 |
| 2 | 2 |
| 3 | 0 |
| 4 | 5 |
| 5 | 4 |
| 6 | 0 |
| 7 | 0 |
| 8 | 0 |
| 9 | 0 |
| 10 | 0 |
| 11 | 0 |
| 12 | 3 |
| 13 | 0 |
| 14 | 0 |
| 15 | 0 |
| 16 | 0 |
| 17 | 1 |
| 18 | 0 |
| 19 | 0 |
| | rrmindex |
| : | : |
| M | 0 |

**FIG. 3**

EP 1 714 216 B1

**DHCPStack**

stackindex

| | |
|---|---|
| 1 | 0 |
| 2 | 0 |
| 3 | 0 |
| 4 | 0 |
| 5 | 3 |
| 6 | 6 |
| 7 | 7 |
| 8 | 8 |
| 9 | 9 |
| 10 | 10 |
| | rrmindex |
| | : |
| | |
| | |
| | |
| N | N |

StackCnt >> (points to stackindex 5)

**DHCP-RRM**

rrmindex

| | |
|---|---|
| 1 | vcxindex=17; MAC, IP, Lease |
| 2 | vcxindex=2; MAC, IP, Lease |
| 3 | vcxindex=0; MAC=0, IP=0, Lease=0 |
| 4 | vcxindex=5; MAC, IP, Lease |
| 5 | vcxindex=4; MAC, IP, Lease |
| 6 | vcxindex=0; MAC=0, IP=0, Lease=0 |
| 7 | vcxindex=0; MAC=0, IP=0, Lease=0 |
| 8 | vcxindex=0; MAC=0, IP=0, Lease=0 |
| 9 | vcxindex=0; MAC=0, IP=0, Lease=0 |
| 10 | vcxindex=0; MAC=0, IP=0, Lease=0 |
| | |
| | : |
| | |
| | |
| N | vcxindex=0; MAC=0, IP=0, Lease=8 |

**DHCPIndex**

vcxindex

| | |
|---|---|
| 1 | 0 |
| 2 | 2 |
| 3 | 0 |
| 4 | 5 |
| 5 | 4 |
| 6 | 0 |
| 7 | 0 |
| 8 | 0 |
| 9 | 0 |
| 10 | 0 |
| 11 | 0 |
| 12 | 0 |
| 13 | 0 |
| 14 | 0 |
| 15 | 0 |
| 16 | 0 |
| 17 | 1 |
| 18 | 0 |
| 19 | 0 |
| | rrmindex |
| | : |
| | : |
| | |
| M | 0 |

**FIG. 4**

EP 1 714 216 B1

## DHCPStack

| stackindex | |
|---|---|
| 1 | 0 |
| 2 | 0 |
| 3 | 0 |
| 4 | 0 |
| 5 | 0 |
| StackCnt >> 6 | 6 |
| 7 | 7 |
| 8 | 8 |
| 9 | 9 |
| 10 | 10 |
| | rrmindex |
| | : |
| | |
| | |
| | |
| N | N |

## DHCP-RRM

| rrmindex | |
|---|---|
| 1 | vcxindex=17; MAC, IP, Lease |
| 2 | vcxindex=2; MAC, IP, Lease |
| 3 | vcxindex=14; MAC, IP, Lease |
| 4 | vcxindex=5; MAC, IP, Lease |
| 5 | vcxindex=4; MAC, IP, Lease |
| 6 | vcxindex=0; MAC=0, IP=0, Lease=0 |
| 7 | vcxindex=0; MAC=0, IP=0, Lease=0 |
| 8 | vcxindex=0; MAC=0, IP=0, Lease=0 |
| 9 | vcxindex=0; MAC=0, IP=0, Lease=0 |
| 10 | vcxindex=0; MAC=0, IP=0, Lease=0 |
| | : |
| N | vcxindex=0; MAC=0, IP=0, Lease=8 |

## DHCPIndex

| vcxindex | |
|---|---|
| 1 | 0 |
| 2 | 2 |
| 3 | 0 |
| 4 | 5 |
| 5 | 4 |
| 6 | 0 |
| 7 | 0 |
| 8 | 0 |
| 9 | 0 |
| 10 | 0 |
| 11 | 0 |
| 12 | 0 |
| 13 | 0 |
| 14 | 3 |
| 15 | 0 |
| 16 | 0 |
| 17 | 1 |
| 18 | 0 |
| 19 | 0 |
| | rrmindex |
| | : |
| M | 0 |

**FIG. 5**

EP 1 714 216 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004038979 A2

- EP 1260907 A1